(19)

**Europäisches Patentamt**
**European Patent Office**
**Office européen des brevets**

(11) **EP 3 498 667 A1**

(12) **EUROPEAN PATENT APPLICATION**

(43) Date of publication:
**19.06.2019 Bulletin 2019/25**

(51) Int Cl.:
*C01B 21/064* (2006.01)     *C01B 21/068* (2006.01)
*C01B 21/072* (2006.01)     *C01F 5/02* (2006.01)
*C01F 7/02* (2006.01)     *C01B 32/956* (2017.01)

(21) Application number: **17208216.6**

(22) Date of filing: **18.12.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **3M Innovative Properties Company
Saint Paul, MN 55133-3427 (US)**

(72) Inventors:
• **Lesniak, Christoph
87474 Buchenberg (DE)**

• **Schädel, Robert
87435 Kempten (DE)**
• **Uibel, Krishna
87448 Waltenhofen (DE)**

(74) Representative: **Mössner, Brigitte
3M Deutschland GmbH
Office of Intellectual Property Counsel
(PC 072P)
Carl-Schurz-Strasse 1
41453 Neuss (DE)**

(54) **POWDER COMPOSITION COMPRISING FIRST AND SECOND AGGLOMERATES OF INORGANIC PARTICLES AND POLYMER COMPOSITION COMPRISING A POLYMER AND THE POWDER COMPOSITION**

(57)     The present disclosure relates to a powder composition comprising first and second agglomerates of inorganic particles, to a polymer composition comprising a polymer and said powder composition, and to a composite article made from said polymer composition. The present disclosure further relates to a process for producing said powder composition and to a process for making said composite article, and to the use of said powder composition as thermal conduction means to control the temperature of electrical and electronic components or assemblies or batteries. The present disclosure further relates to a kit of parts for producing said powder composition.

EP 3 498 667 A1

**Description**

Technical Field

The present disclosure relates to a mixture of agglomerates of first and second agglomerates of inorganic particles and to a composition comprising a polymer and a mixture of agglomerates of first and second agglomerates of inorganic particles.

Background

Thermally conductive polymer compounds are used for thermal management solutions. For electronic devices, like in mobile devices, for LED technology or for electric vehicles, there is a growing demand for thermally conductive and electrically insulating polymer materials. To improve performance of these materials, thermal conductivity needs to be increased. To this end, thermally conductive fillers are used such as boron nitride, alumina, aluminum nitride, silicon carbide, silicon nitride, magnesium oxide or minerals. With increasing load of thermally conductive fillers, higher values for thermal conductivity can be obtained. The maximum loads of fillers in compounds are typically limiting thermal conductivities that can be achieved. High additions of fillers change the processability of the filled polymer compositions. The higher the solid loading, the higher is the viscosity of the polymer composition. To reduce the viscosity, metal-organic additives, for example silanes, can be used. Additives are not desired for certain applications. Silanes can change the electrical properties of the filled polymer compounds.
WO2008042446 discloses a boron nitride composition comprising at least two different types of boron nitride powder materials, for example spherical agglomerates of boron nitride and platelet boron nitride. The viscosity of a silicone resin filled with boron nitride decreases when platelet shaped boron nitride with large platelets is added to spherical boron nitride.
There is still a need for filled polymer materials having high thermal conductivity at low viscosities.

Summary

In a first aspect, the present disclosure relates to a powder composition comprising first and second agglomerates of inorganic particles, wherein the first agglomerates have an envelope density of from 20 to 70% of the theoretical density of the inorganic particles of the first agglomerates, and wherein the second agglomerates have an envelope density of from 50 to 100% of the theoretical density of the inorganic particles of the second agglomerates, and wherein the second agglomerates have an envelope density which is higher than the envelope density of the first agglomerates.
In another aspect, the present disclosure also relates to a polymer composition comprising a polymer and the powder composition disclosed herein.
In yet a further aspect, the present disclosure relates to a composite article made from the polymer composition disclosed herein.
In yet a further aspect, the present disclosure relates to a process for producing the powder composition disclosed herein, the process comprising the steps of
providing a first powder comprising first agglomerates of inorganic particles and a
second powder comprising second agglomerates of inorganic particles, mixing the first and the second powder;
wherein the first agglomerates have an envelope density of from 20 to 70% of the theoretical density of the inorganic particles of the first agglomerates, and wherein the second agglomerates have an envelope density of from 50 to 100% of the theoretical density of the inorganic particles of the second agglomerates, and wherein the second agglomerates have an envelope density which is higher than the envelope density of the first agglomerates.
In yet a further aspect, the present disclosure relates to a process for making the composite article disclosed herein, comprising the steps of

    providing the powder composition as disclosed herein and a polymer,
    mixing the powder composition and the polymer to obtain a mixed composition,
    placing the mixed composition into a mold, and
    curing the mixed composition, thereby obtaining the composite article.

In yet a further aspect, the present disclosure relates to the use of the powder composition disclosed herein as thermal conduction means to control the temperature of electrical and electronic components or assemblies or batteries.
In yet a further aspect, the present disclosure relates to a kit of parts for producing the powder composition disclosed herein, the kit of parts comprising a first part comprising first agglomerates of inorganic particles in powder form and a second part comprising second agglomerates of inorganic particles in powder form, wherein the first agglomerates have an envelope density of from 20 to 70% of the theoretical density of the inorganic particles of the first agglomerates, and wherein the second agglomerates have an envelope density of from 50 to 100% of the theoretical density of the inorganic particles of the second agglomerates, and wherein the second agglomerates have an envelope density which is higher than the envelope density of the first agglomerates.

In some embodiments, the viscosity of polymer compositions filled with the powder composition comprising first and second agglomerates as disclosed herein is lower than the viscosity which would have been expected from a linear relationship between the viscosities of polymer compositions filled with first agglomerates alone and filled with second agglomerates alone. Thermal conductivity of the composite article filled with the powder composition comprising first and second agglomerates as disclosed herein may be as expected from a linear relationship between the thermal conductivities of composite articles filled with first agglomerates alone and filled with second agglomerates alone, and in some embodiments thermal conductivity may even exceed the values which would be expected from a linear relationship.

In some embodiments, for the composite articles made with the powder composition comprising first and second agglomerates as disclosed herein, the filler loadings with thermal conductive fillers may be higher than the filler loadings obtainable with first agglomerates alone, and consequently the thermal conductivity of the composite articles made with the powder composition comprising first and second agglomerates as disclosed herein may be higher than the thermal conductivity obtainable with first or second agglomerates alone.

In some embodiments, for the composite articles made with the powder composition comprising first and second agglomerates as disclosed herein, the thermal conductivity is as high as or is almost as high as the thermal conductivity of a composite article made with first agglomerates alone, while the viscosity of the polymer composition used for making the composite article may be lower or significantly lower than the viscosity of a polymer composition made with first agglomerates alone.

Detailed Description

The powder composition disclosed herein comprises first and second agglomerates of inorganic particles, wherein the first agglomerates have an envelope density of from 20 to 70% of the theoretical density of the inorganic particles of the first agglomerates, and wherein the second agglomerates have an envelope density of from 50 to 100% of the theoretical density of the inorganic particles of the second agglomerates. The second agglomerates have an envelope density which is higher than the envelope density of the first agglomerates.

In the following, the first agglomerates are also referred to as low density agglomerates, and the second agglomerates are also referred to as high density agglomerates.

In some embodiments, the first agglomerates of the powder composition disclosed herein have an envelope density of from 30 to 65% of the theoretical density of the inorganic particles of the first agglomerates, and the second agglomerates have an envelope density of from 65 to 95% of the theoretical density of the inorganic particles of the second agglomerates.

In some embodiments, the second agglomerates of the powder composition disclosed herein have an envelope density which is at least 5%, or at least 10%, or at least 20% higher than the envelope density of the first agglomerates, based on the envelope density of the first agglomerates.

In some embodiments, the powder composition disclosed herein consists of first and second agglomerates of inorganic particles, wherein the first agglomerates have an envelope density of from 20 to 70% of the theoretical density of the inorganic particles of the first agglomerates, and wherein the second agglomerates have an envelope density of from 50 to 100% of the theoretical density of the inorganic particles of the second agglomerates. The second agglomerates have an envelope density which is higher than the envelope density of the first agglomerates.

Envelope density of the agglomerates is defined by the ratio of the mass of the agglomerates to the sum of the volumes of the solid in each agglomerate and the voids within each agglomerate that is within close-fitting imaginary envelopes completely surrounding each agglomerate. Envelope density is determined from the volume of the solid material, open pores, and closed pores. The volume of interagglomerate voids, i.e. the volume of the voids between agglomerates, is not part of the envelope volume. In contrast to that, the bulk volume is the envelope volume of the agglomerates plus the volume of the interagglomerate voids. Envelope density is the mass of the agglomerates divided by the volume of the agglomerates within an imaginary, closely conforming skin that envelops each agglomerate, and therefore, may include the volume of small surface irregularities.

The envelope density is measured by means of mercury intrusion porosimetry. The measurement can be carried out according to ISO 15901-1 (2016-04-01). The volume of the interagglomerate voids is subtracted from the bulk volume, resulting in the envelope volume. The envelope density is determined from the mass of the sample used for the mercury intrusion porosimetry measurement and from the envelope volume. The bulk volume is measured by mercury intrusion porosimetry according to ISO 15901-1 (2016-04-01). The volume of the interagglomerate voids is determined from the intrusion graph obtained by the mercury intrusion porosimetry, where the first mathematical derivation of the graph reaches a miminum after the filling of the interagglomerate voids, i.e. after the filling of the voids between the agglomerates.

As the envelope density of the first agglomerates is lower than the envelope density of the second agglomerates, the first agglomerates are more porous than the second agglomerates.

The inorganic particles of the first and second agglomerates may be selected from the group consisting of boron nitride, alumina, aluminum nitride, silicon carbide, silicon nitride, magnesium oxide, or mixtures thereof.

The theoretical density of the inorganic particles is the density of an inorganic particle free of defects. For boron nitride, the theoretical density of the inorganic particles is 2.27 g/cm$^3$. For alumina, the theoretical density of the inorganic particles is 3.95 g/cm$^3$. For aluminum nitride, the theoretical density of the inorganic particles is 3.26 g/cm$^3$. For silicon carbide, the theoretical density of the inorganic particles is 3.21 g/cm$^3$. For silicon nitride, the theoretical density of the inorganic particles is 3.44 g/cm$^3$. For magnesium oxide, the theoretical density of the inorganic particles is 3.58 g/cm$^3$.

In some embodiments of the powder composition disclosed herein, the inorganic particles of the first and second agglomerates comprise boron nitride. Preferably, the inorganic particles of the first agglomerates of these embodiments comprise at least 50% by weight of boron nitride, based on the total weight of the first agglomerates, and the inorganic particles of the second agglomerates preferably comprise at least 50% by weight of boron nitride, based on the total weight of the second agglomerates.

In some other embodiments, the inorganic particles of the first agglomerates comprise at least 90% by weight of boron nitride, based on the total weight of the first agglomerates, and the inorganic particles of the second agglomerates comprise at least 90% by weight of boron nitride, based on the total weight of the second agglomerates. The envelope density of the first agglomerates of these embodiments may be from 0.5 to 1.6 g/cm$^3$ and the envelope density of the second agglomerates may be from 1.1 to 2.27 g/cm$^3$, or the envelope density of the first agglomerates may be from 0.7 to 1.5 g/cm$^3$ and the envelope density of the second agglomerates may be from 1.5 to 2.2 g/cm$^3$.

In some further embodiments of the powder composition disclosed herein, the inorganic particles of the first and second agglomerates comprise alumina. Preferably, the inorganic particles of the first agglomerates of these embodiments comprise at least 50% by weight of alumina, based on the total weight of the first agglomerates, and the inorganic particles of the second agglomerates preferably comprise at least 50% by weight of alumina, based on the total weight of the second agglomerates.

In some further embodiments of the powder composition disclosed herein, the inorganic particles of the first and second agglomerates comprise aluminum nitride. Preferably, the inorganic particles of the first agglomerates of these embodiments comprise at least 50% by weight of aluminum nitride, based on the total weight of the first agglomerates, and the inorganic particles of the second agglomerates preferably comprise at least 50% by weight of aluminum nitride, based on the total weight of the second agglomerates.

In yet some other embodiments of the powder composition disclosed herein, the inorganic particles of the first and second agglomerates comprise silicon carbide. Preferably, the inorganic particles of the first agglomerates of these embodiments comprise at least 50% by weight of silicon carbide, based on the total weight of the first agglomerates, and the inorganic particles of the second agglomerates preferably comprise at least 50% by weight of silicon carbide, based on the total weight of the second agglomerates.

In yet some other embodiments of the powder composition disclosed herein, the inorganic particles of the first and second agglomerates comprise silicon nitride. Preferably, the inorganic particles of the first agglomerates of these embodiments comprise at least 50% by weight of silicon nitride, based on the total weight of the first agglomerates, and the inorganic particles of the second agglomerates preferably comprise at least 50% by weight of silicon nitride, based on the total weight of the second agglomerates.

In yet some other embodiments of the powder composition disclosed herein, the inorganic particles of the first and second agglomerates comprise magnesium oxide. Preferably, the inorganic particles of the first agglomerates of these embodiments comprise at least 50% by weight of magnesium oxide, based on the total weight of the first agglomerates, and the inorganic particles of the second agglomerates preferably comprise at least 50% by weight of magnesium oxide, based on the total weight of the second agglomerates.

The average agglomerate size ($d_{50}$) of the first and second agglomerates may be from 1 $\mu$m to 5 mm. In some embodiments, the average agglomerate size ($d_{50}$) is from 25 to 500 $\mu$m, or from 50 to 500 $\mu$m, or from 70 to 250 $\mu$m. The average agglomerate size ($d_{50}$) can be measured by laser diffraction (wet measurement) up to a $d_{50}$ of 2 mm. For an average agglomerate size ($d_{50}$) above 2 mm, the measurement can be done with a sieve stack.

The specific surface area (BET) of the first agglomerates is higher than the specific surface area of the second agglomerates.

The first and second agglomerates may be spherical, flake-shaped or scale-like, in the form of fibers or irregular shaped.

The first and second agglomerates may have isotropic or anisotropic properties.

For embodiments of the powder composition with the inorganic particles of the first and second agglomerates comprising boron nitride, the specific surface area (BET) of the first and second agglomerates may be at most 30 m$^2$/g,

or at most 20 m$^2$/g, or at most 15m$^2$/g. The oxygen content of the first and second agglomerates consisting essentially of boron nitride may be up to 5 wt.-%, or up to 1 wt.-%, or up to 0.5 wt.-%, or up to 0.1 wt.-%.

The inorganic particles of the first and second agglomerates may also be referred to as crystallites or primary particles. The first and second agglomerates of the powder composition disclosed herein may comprise at least 2, or at least 5, or at least 10, or at least 15, or at least 20 primary particles. The primary particles can be observed as individual particles by scanning electron microscopy (SEM), by transmission electron microscopy (TEM), or by polished cross sections of composite articles made with the powder composition disclosed herein and a polymer.

The primary particles may have an average particle size ($d_{50}$) from 0.2 $\mu$m to 100 $\mu$m, The average particle size ($d_{50}$) of the primary particles may be measured by laser diffraction (wet measurement).

Boron nitride primary particles may be platelet-shaped.

The primary particles of the first and second agglomerates may have a preferred orientation in the agglomerates or may be randomly oriented in the agglomerates.

In the powder composition disclosed herein, the amount of first agglomerates may be up to 99% by weight, based on the total content of first and second agglomerates, and the amount of second agglomerates may be up to 99% by weight, based on the total content of first and second agglomerates. In some embodiments, the amount of first agglomerates may be up to 95% by weight, based on the total content of first and second agglomerates, and the amount of second agglomerates may be up to 95% by weight, based on the total content of first and second agglomerates. In some embodiments, the amount of first agglomerates may be up to 90% by weight, based on the total content of first and second agglomerates, and the amount of second agglomerates may be up to 90% by weight, based on the total content of first and second agglomerates.

In some embodiments, the amount of first agglomerates may be at least 20% by weight, or at least 50% by weight, or at least 60% by weight, or at least 70% by weight, based on the total content of first and second agglomerates. Correspondingly, the amount of second agglomerates may be at most 30% by weight, or at most 40% by weight, or at most 50% by weight, or at most 80% by weight, based on the total content of first and second agglomerates.

In some embodiments, the amount of first agglomerates may be from 10 to 95%, or from 25 to 95%, or from 50 to 95%, or from 75 to 95% by weight, based on the total content of first and second agglomerates, and the amount of second agglomerates may be from 5 to 90%, or from 5 to 75%, or from 5 to 50%, or from 5 to 25% by weight, based on the total content of first and second agglomerates.

In some embodiments of the powder composition disclosed herein, the inorganic particles of the first agglomerates comprise boron nitride in an amount of at least 50% by weight, based on the total weight of the first agglomerates, and the inorganic particles of the second agglomerates comprise boron nitride in an amount of at least 50% by weight, based on the total weight of the second agglomerates, and the amount of the first agglomerates is from 50 to 95% by weight, based on the total content of the first and the second agglomerates, and the amount of the second agglomerates is from 5 to 50% by weight, based on the total content of first and second agglomerates, and the average agglomerate size ($d_{50}$) of the first agglomerates is from 25 $\mu$m to 500 $\mu$m, and the average agglomerate size ($d_{50}$) of the second agglomerates is from 25 $\mu$m to 500 $\mu$m, and the envelope density of the first agglomerates is from 30 to 65% of the theoretical density of the inorganic particles of the first agglomerates, and the envelope density of the second agglomerates is from 65 to 95% of the theoretical density of the inorganic particles of the second agglomerates, and the specific surface area of the first agglomerates is at most 30 m$^2$/g, and the specific surface area of the second agglomerates is at most 30 m$^2$/g.

In some embodiments of the powder composition disclosed herein, the inorganic particles of the first agglomerates comprise boron nitride in an amount of at least 50% by weight, based on the total weight of the first agglomerates, and the inorganic particles of the second agglomerates comprise boron nitride in an amount of at least 50% by weight, based on the total weight of the second agglomerates, and the amount of the first agglomerates is from 50 to 95% by weight, based on the total content of the first and the second agglomerates, and the amount of the second agglomerates is from 5 to 50% by weight, based on the total content of first and second agglomerates, and the average agglomerate size ($d_{50}$) of the first agglomerates is from 25 $\mu$m to 500 $\mu$m, and the average agglomerate size ($d_{50}$) of the second agglomerates is from 25 $\mu$m to 500 $\mu$m, and the envelope density of the first agglomerates is from 30 to 65% of the theoretical density of the inorganic particles of the first agglomerates, and the envelope density of the second agglomerates is from 65 to 95% of the theoretical density of the inorganic particles of the second agglomerates, and the specific surface area of the first agglomerates is at most 30 m$^2$/g, and the specific surface area of the second agglomerates is at most 30 m$^2$/g, and the first and second agglomerates are flake-shaped.

In some embodiments of the powder composition disclosed herein, either the first or the second agglomerates of inorganic particles do not have a spherical shape. In some further embodiments of the powder composition disclosed herein, both of the first and the second agglomerates of inorganic particles do not have a spherical shape.

The powder composition disclosed herein may also comprise inorganic particles in a non-agglomerated form.

The powder composition disclosed herein may have a content of metals in elemental form of at most 5 wt.-%, or at most 1 wt.-%, or at most 0.1 wt.-%, based on the total amount of the powder composition. The powder composition disclosed herein may have a content of graphite of at most 5 wt.-%, or at most 1 wt.-%, or at most 0.3 wt.-%, based on the total amount of the powder composition.

The first and second agglomerates used herein may be produced by methods known in the art, such as spray-drying which is used for making spherical shaped agglomerates, or other methods such as build-up granulation. The first and second agglomerates comprising boron nitride may also be produced by cold-pressing and crushing, or by cold-pressing, sintering and crushing, or by cold-pressing, crushing and sintering. The pressing step can be repeated before sintering. The first and second agglomerates comprising boron nitride may also be produced by hot-pressing and milling. First and second agglomerates comprising boron nitride may also be produced by feeding a boron nitride powder continuously in a uniform amount into the space between two counterrotating rolls, thereby obtaining boron nitride agglomerates in a flake-shaped form. Such a process is described in US 2012/0114905 A1.

For producing the first and second agglomerates used herein, also a sintering step may be carried out. The sintering step may be carried out at temperatures of 1200 to 2200 °C in an atmosphere comprising nitrogen, for first and second agglomerates comprising boron nitride, or at temperatures of 1700 to 2200 °C in an inert atmosphere or under vacuum, for first and second agglomerates comprising silicon carbide.

Following their production, the first and second agglomerates may be subjected to further treatments. For example, one or more of the following possible treatments may be carried out:

- a steam treatment

- a surface modification with silanes, titanates or other organometallic compounds, either at room temperature or under the influence of temperature and with carrier or reaction gases.

- a surface modification with polymers, for example with polyethylene glycol (PEG), polyvinyl alcohol (PVA), polyvinyl burtyral (PVB), polyvinyl pyrrolidone (PVP), copolymers, acrylates, oils or carboxylic acids.

- an infiltration with sol-gel systems, for example with boehmite sol or $SiO_2$ sol, or with water-insoluble glasses or nanoparticles or surface-modified nanoparticles or mixtures thereof.

- an infiltration with water-soluble or ethanol-soluble polymers. The boron nitride agglomerates may be infiltrated with resins such as, for example, silicone, epoxy or polyurethane resins, and the resin may be hardened with hardener or be temperature-hardened before or during compounding.

Further disclosed herein is also a polymer composition comprising a polymer and the powder composition as disclosed herein. Suitable polymers are cast resins, thermoplastic polymers, thermoplastic processable duroplastic polymers, thermoplastic elastomers, elastomers, silicones, epoxy resins, polyurethanes, phenolic resins and melamine resins. One-component or two-component resins may be used.

The polymer composition may comprise from 20 to 95% by volume of a polymer and from 5 to 80% by volume of the powder composition disclosed herein, based on the total volume of the polymer composition. In some embodiments, the polymer composition may comprise from 40 to 95% by volume of a polymer and from 5 to 60% by volume of the powder composition disclosed herein, based on the total volume of the polymer composition. In some embodiments, the polymer composition comprises from 40 to 95% by volume of a polymer and from 5 to 60% by volume of the powder composition, based on the total volume of the polymer composition, and the inorganic particles of the first agglomerates of the powder composition comprise at least 50% by weight of boron nitride, based on the total weight of the first agglomerates, and the inorganic particles of the second agglomerates comprise at least 50% by weight of boron nitride, based on the total weight of the second agglomerates.

The polymer composition disclosed herein may have a content of metals in elemental form of at most 5 wt.-%, or at most 1 wt.-%, or at most 0.1 wt.-%, based on the total amount of the polymer composition. The polymer composition disclosed herein may have a content of graphite of at most 5 wt.-%, or at most 1 wt.-%, or at most 0.3 wt.-%, based on the total amount of the polymer composition.

The polymer composition disclosed herein may comprise, besides the powder composition disclosed herein, further inorganic filler materials, for example oxides, hydroxides, carbides, nitrides, minerals and combinations thereof. The oxides, hydroxides, nitrides and carbides may be selected from the group comprising alumina, magnesium oxide, aluminum nitride, aluminum hydroxide, aluminum oxyhydroxide, silicon dioxide, silicon carbide, silicon nitride and mixtures thereof. The mineral fillers used may be selected from the group comprising aluminosilicates, aluminum silicates, magnesium silicate ($2MgO*SiO_2$), magnesium aluminate ($MgO*Al_2O_3$), brucite (magnesium hydroxide, $Mg(OH)_2$), quartz, cristobalite, phyllosilicates like talcum and mixtures thereof. The aluminosilicates of aluminum silicates used may be, for example, kyanite ($Al_2SiO_5$) and/or mullite ($3Al_2O_3*2SiO_2$).

Further disclosed herein is also a composite article made from the polymer composition disclosed herein.

The thermal conductivity of the composite article may be at least 1 W/m*K. The thermal conductivity of the composite article is to be understood as bulk thermal conductivity.

The composite article may be an adhesive article or a non-adhesive article.

The composite article may be a solid or a paste. For pastes, for example silicone oil or fluorinated oils may be used as polymer.

From composite articles in solid form, polished sections can be prepared in order to determine the porosity of the different agglomerates, i.e. the porosity of the first and second agglomerates in the composite article. The porosity of an individual agglomerate can be determined by image analysis of the area of the pores within the agglomerate in the polished section. The image analysis can be performed on micrographs of the polished section taken by optical microscopy, by scanning electron microscopy or transmission electron microscopy. The area percentage of the pores corresponds to the porosity of the individual agglomerate in percent by volume. The porosity in percent by volume corresponds to the envelope density in percent of the theoretical density of the inorganic particles of the agglomerate.

Further disclosed herein is also a kit of parts for producing the powder composition disclosed herein. The kit of parts comprises a first part comprising first agglomerates of inorganic particles in powder form and a second part comprising second agglomerates of inorganic particles in powder form. The first agglomerates have an envelope density of from 20 to 70% of the theoretical density of the inorganic particles of the first agglomerates, and the second agglomerates have an envelope density of from 50 to 100% of the theoretical density of the inorganic particles of the second agglomerates. The second agglomerates have an envelope density which is higher than the envelope density of the first agglomerates.

The powder composition disclosed herein may be produced according to a process comprising the steps of providing a first powder comprising first agglomerates of inorganic particles and a

second powder comprising second agglomerates of inorganic particles, and mixing the first and the second powder; wherein the first agglomerates have an envelope density of from 20 to 70% of the theoretical density of the inorganic particles of the first agglomerates, and wherein the second agglomerates have an envelope density of from 50 to 100% of the theoretical density of the inorganic particles of the second agglomerates, and wherein the second agglomerates have an envelope density which is higher than the envelope density of the first agglomerates.

The step of mixing the first and the second powder may be carried out in standard mixing units known in the art such as a jar roller, an Eirich mixer, a V-blender or a drum hoop mixer.

The composite article disclosed herein may be made according to a process comprising the steps of

providing the powder composition as disclosed herein and a polymer,
mixing the powder composition and the polymer to obtain a mixed composition,
placing the mixed composition into a mold, and
curing the mixed composition, thereby obtaining the composite article.

The step of mixing of the powder composition and the polymer may be carried out by standard mixing units known in the art, such as a mixing drum, a V-blender, a drum hoop mixer, a vibratory mill or an Eirich mixer or by extruding with standard compounding units known in the art, such as a single-screw extruder, a twin screw extruder, tangential or closely intermeshing, co- or counter-rotating, a planetary roller extruder, a grooved barrel extruder, a pin-type extruder, calendaring, a Buss co-kneader, a shearing roller extruders, injection molding machines and stirred tank.

The steps of placing the mixed composition into a mold and curing can be carried out by injection molding, by casting or hot pressing. If the step of placing the mixed composition into a mold and curing is carried out by casting, the mold can also be a device from which the molded and cured article is not demoulded, such as a housing, or the space between a transformator and its housing. Other examples for such devices are pumps, mobile phones, circuit boards, control devices, LEDs and electric engines. It is also possible to apply the mixed composition of the powder composition and a polymer as a coating onto a substrate, such as a plate, a heatsink or a wire.

The powder composition disclosed herein can be used as thermal conduction means to control the temperature of electrical and electronic components or assemblies or batteries, such as in mobile devices, in LED technology or in electric vehicles.

Examples

Materials

The properties of the first and second agglomerates (low density and high density agglomerates) used in the examples and comparative examples are shown in Table 1.

Table 1.

| Agglomerate Type | $d_{10}$ | $d_{50}$ | $d_{90}$ | Oxygen | BET | Envelope density | Envelope density |
|---|---|---|---|---|---|---|---|
| | [$\mu$m] | [$\mu$m] | [$\mu$m] | [wt.-%] | [m$^2$/g] | [g/cm$^3$] | [% TD] |
| BN-1 | 40 | 100 | 180 | 0.1 | 2.7 | 0.9 | 40 |
| BN-2 | 100 | 170 | 270 | 0.8 | 1.6 | 1.7 | 75 |
| BN-3 | 130 | 320 | 610 | 0.1 | 6.0 | 1.3 | 57 |
| BN-4 | 30 | 230 | 490 | 0.1 | 2.0 | 1.7 | 75 |
| SC-1 | 40 | 50 | 70 | 0.2 | 4.2 | 1.6 | 50 |
| SC-2 | 40 | 50 | 70 | 0.06 | 0.1 | 3.1 | 97 |

Irregular shaped low density boron nitride agglomerates (BN-1)

Irregular shaped low density boron nitride agglomerates BN-1 are 3M™ Cooling Filler Agglomerates CFA150 (available from 3M Technical Ceramics, Zweigniederlassung der 3M Deutschland GmbH), sieved to the agglomerate size fraction 100 - 200 $\mu$m. The average particle size ($d_{50}$) of the low density boron nitride agglomerates BN-1 is 100 $\mu$m. The average particle size ($d_{50}$) of the hexagonal boron nitride primary particles is 15 $\mu$m. The agglomerates BN-1 have an envelope density of 0.9 g/cm$^3$ corresponding to 39% of the theoretical density of boron nitride of 2.27 g/cm$^3$. The specific surface area of the agglomerates BN-1 is 2.7 m$^2$/g, the oxygen content is 0.1 wt.-%, the carbon content is 0.02 wt.-% and the boron oxide content is 0.014 wt.-%.

Irregular shaped high density boron nitride agglomerates (BN-2)

Irregular shaped high density boron nitride agglomerates BN-2 are cut-off from hot-pressed boron nitride billets, crushed, milled, acid-washed and sieved to the agglomerate size fraction 100 - 200 $\mu$m. The average particle size ($d_{50}$) of the high density boron nitride agglomerates BN-2 is 150 $\mu$m. The average particle size ($d_{50}$) of the hexagonal boron nitride primary particles is 6 $\mu$m. The agglomerates BN-2 have an envelope density of 1.7 g/cm$^3$ corresponding to 75% of the theoretical density of boron nitride of 2.27 g/cm$^3$. The specific surface area of the agglomerates BN-2 is 1.6 m$^2$/g, the oxygen content is 0.8 wt.-%, the carbon content is 0.014 wt.-% and the boron oxide content is 0.02 wt.-%.

Flake-shaped low density boron nitride agglomerates (BN-3)

Hexagonal boron nitride powder with a primary particle size $d_{50}$ of 3 $\mu$m (from 3M Technical Ceramics, Zweigniederlassung der 3M Deutschland GmbH, Kempten, Germany) is fed continuously between two silicon nitride rolls without a gap. The rolls are rotated at 15 rev/min and are squeezed together with a force of 1.7 t. In this way the boron nitride powder is roll-compacted. The resultant material is agglomerated material in the form of flakes with a thickness of about 30 $\mu$m. The obtained flake-shaped agglomerates are then heat treated at 1200 °C for 2 hours in a nitrogen atmosphere, crushed and sieved to < 500 $\mu$m. The specific surface area of the obtained agglomerates BN-3 is 6 m$^2$/g and the oxygen content is 0.1 wt.-%. The envelope density is 1.3 g/cm$^3$, corresponding to 57% of the theoretical density of boron nitride of 2.27 g/cm$^3$.

Flake-shaped high density boron nitride agglomerates (BN-4)

Hexagonal boron nitride powder with a primary particle size $d_{50}$ of 15 $\mu$m (from 3M Technical Ceramics, Zweigniederlassung der 3M Deutschland GmbH, Kempten, Germany) is fed continuously between two silicon nitride rolls without a gap. The rolls are rotated at 15 rev/min and are squeezed together with a force of 1.7 t. In this way the boron nitride powder is roll-compacted. The resultant material is agglomerated material in the form of flakes with a thickness of about 30 $\mu$m. The obtained flake-shaped agglomerates are then heat treated at 1200 °C for 2 hours in a nitrogen atmosphere and crushed and sieved to < 500 $\mu$m. The specific surface area of the obtained agglomerates BN-4 is 2 m$^2$/g and the oxygen content is 0.1 wt.-%. The envelope density is 1.7 g/cm$^3$, corresponding to 75% of the theoretical density of boron nitride of 2.27 g/cm$^3$.

Low density spherical-shaped silicon carbide agglomerates (SC-1)

Low density spherical-shaped silicon carbide agglomerates SC-1 are made by spray-drying of a silicon carbide powder having a mean particle size $d_{50}$ of 0.5 $\mu$m, a $d_{100}$ of 5.8 $\mu$m and a specific surface area (BET) of 13 $m^2$/g. The silicon carbide powder is mixed into an aqueous suspension with 5 wt.-% of sintering aids and about 10 wt.-% of organic binder and then spray-dried. The spray-dried agglomerates are sintered at 1800 °C for 2h in vacuum and are sieved to the agglomerate size fraction 25 $\mu$m - 63 $\mu$m. The obtained agglomerates SC-1 have an average agglomerate size $d_{50}$ of 50 $\mu$m and a specific surface area (BET) of 4.2 $m^2$/g. The envelope density is 1.6 $g/cm^3$, corresponding to 50% of the theoretical density of silicon carbide of 3.21 $g/cm^3$.

High density spherical-shaped silicon carbide agglomerates (SC-2)

The high density spherical-shaped silicon carbide agglomerates are spray-dried and sintered agglomerates. The spray-drying is carried out as described for the low density spherical-shaped silicon carbide agglomerates SC-1. The spray-dried agglomerates are sintered at 2050 °C for 2h in vacuum and then sieved to the agglomerate size fraction 25 $\mu$m - 63 $\mu$m. The obtained agglomerates SC-2 have an average particle size $d_{50}$ of 50 $\mu$m and a specific surface area (BET) of 0.1 $m^2$/g. The envelope density is 3.1 $g/cm^3$, corresponding to 97% of the theoretical density of silicon carbide of 3.21 $g/cm^3$.

Test methods

The envelope density of the agglomerates is measured by means of mercury intrusion porosimetry, using porosimeter AutoPore® IV 9500 (available from Micromeritics Instrument Corporation, USA). The measurement is carried out according to ISO 15901-1 (2016-04-01). The volume of the interagglomerate voids is subtracted from the bulk volume resulting in the envelope volume. The envelope density is determined from the mass of the sample used for the mercury intrusion porosimetry measurement and from the envelope volume. The bulk volume is measured by mercury intrusion porosimetry according to ISO 15901-1 (2016-04-01). The volume of the interagglomerate voids is determined from the intrusion graph obtained by the mercury intrusion porosimetry, where the first mathematical derivation of the graph reaches a mimimun after the filling of the interagglomerate voids, i.e. after the filling of the voids between the agglomerates.

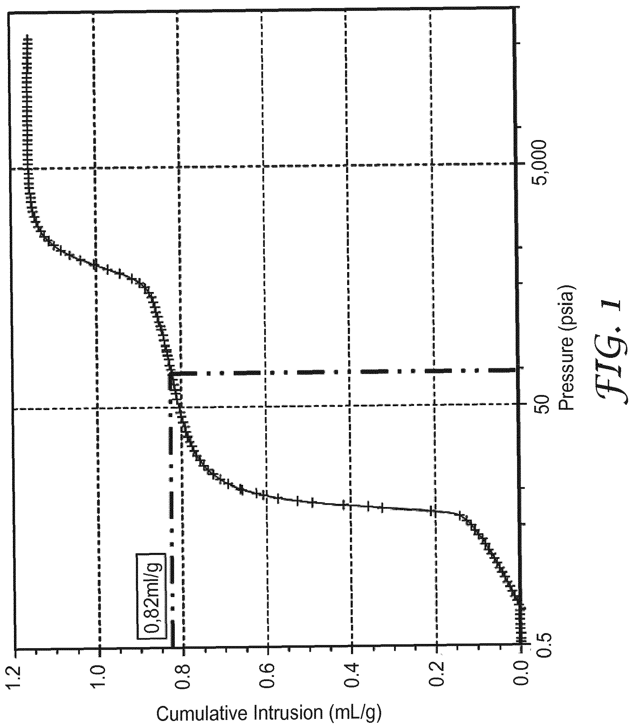

Figure 1 shows the intrusion graph for the agglomerates BN-3 obtained by mercury intrusion porosimetry as described above. At the beginning of the intrusion graph at low intrusion pressures, the curve ascends slowly, corresponding to a re-arrangement of agglomerates within the powder bed. This part of the curve is followed by a part where the curve becomes very steep, at pressures of up to about 50 psia in this case, where the interagglomerate voids, i.e. the voids between the agglomerates, are filled with mercury. When the interagglomerate voids have been filled, the mercury pressure can be increased without a high increase of the intrusion volume. In this part of the intrusion graph where the curve ascends very slowly, the first mathematical derivation of the graph reaches a minimum. This point corresponds to the volume of the interagglomerate voids, which is in this case 0.82 ml/g. At even higher intrusion pressures, the curve becomes steeper again and the intrusion volume increases again more, corresponding to the filling of the intra-agglomerate pores, i.e. the pores within the individual agglomerates. The measured envelope densities for the agglomerates used in the examples and comparative examples are shown in table 1.
Particle size distribution was measured with laser diffraction using Mastersizer 2000, Malvern.

Comparative Examples 1 - 2 and Examples 1 - 2: Epoxy polymer compositions and composite articles made with irregular shaped boron nitride agglomerates

For Comparative Example 1 (CEX1), 45.8 g of the irregular shaped low density boron nitride agglomerates BN-1 and 48.4 g of epoxy resin (Epofix resin, Struers, Willich, Germany) are placed into a 185 ml PP vessel and are mixed via Speedmixer (DAC 600.1, from Hauschild, Hamm, Germany) for 40 seconds at 800 rpm, 1 minute at 2000 rpm and 4 minutes at 800 rpm again. During the mixing, a vacuum of 750 mbar is applied. To the homogenized mixture of resin and filler, 5.8 g of hardener (Epofix hardener, Struers, Wilich, Germany) is added and mixed via Speedmixer at 800 rpm for 40 seconds, 2000 rpm for 30 seconds and 1 minute at 800 rpm again. During the mixing, a vacuum of 750 mbar is applied. After mixing, the obtained polymer composition is filled into a vessel and cooled down to 20 °C in a water bath. After cooling down, the viscosity is measured with a viscosimeter from Brookfield (Type RVDV-II+PX) with Spindle RV7 at 10 rpm. After the viscosity measurement, the polymer composition is degassed in a desiccator for 15 minutes at 40 mbar and is then placed in the Speedmixer, degassing the mixing chamber for 30 seconds before homogenizing for 40 seconds at 800 rpm. The polymer composition is cured for 12 h at 20 °C and is then heated up to 80 °C and further cured for 1h. By curing, a solid disc-shaped composite article with a diameter of 70 mm and a height of 20 mm is obtained. The content of boron nitride filler in the obtained sample of the composite article is 30 vol.-%. Two samples for thermal conductivity measurement are cut out of the disc-shaped sample with the dimensions 10 x 10 x 2 mm$^3$, one sample in a direction in-plane of the disc-shaped sample and one sample in a direction perpendicular to this direction. The thermal conductivity values shown in table 2 are mean values of the two samples, representing the bulk thermal conductivity.

For measuring thermal conductivity, the laser-flash method is used and carried out with the Nanoflash LFA 447 (Netzsch, Selb, Germany) according to DIN EN ISO 22007-4. Measurements are taken at 22 °C.

Thermal conductivity (TC) is determined by measuring the values for thermal diffusivity a, specific thermal capacity $c_p$ and density D, and is calculated from these values according to the equation

$$TC = a * c_p * D.$$

a and $c_p$ are measured with the Nanoflash LFA 447 (Netzsch, Selb, Germany) on the samples that are produced as described above, having the dimensions 10 x 10 x 2 mm$^3$. Density is calculated by weighing and determining the geometrical dimensions of the precisely shaped samples. The standard Pyroceram 9606 is used for the measurement.

For Comparative Example 2 (CEX2), Comparative Example 1 is repeated with the exception that 45.8 g of the irregular shaped high density boron nitride agglomerates BN-2 are used instead of the irregular shaped low density boron nitride agglomerates BN-1, as can also be seen in Table 2.

For Example 1 (EX1), Comparative Example 1 is repeated with the exception that 34.4 g of the low density boron nitride agglomerates BN-1 and 11.5 g of the high density agglomerates BN-2 are used instead of the 45.8 g of the low density boron nitride agglomerates BN-1 (see also Table 2).

For Example 2 (EX2), Comparative Example 1 is repeated with the exception that 22.9 g of the low density agglomerates BN-1 and 22.9 g of the high density agglomerates BN-2 are used instead of the 45.8 g of the low density agglomerates BN-1 (see also Table 2).

As table 2 shows, the polymer composition prepared with low density boron nitride agglomerates alone (Comparative Example 1) has a high viscosity of 350.000 mPa*s. The viscosity of the polymer composition prepared with high density boron nitride agglomerates alone (Comparative Example 2) is 5.000 mPa*s which is 70 times lower than the viscosity of the polymer composition prepared with low density boron nitride agglomerates alone (Comparative Example 1). The composite article prepared with low density agglomerates alone has a thermal conductivity which is 1.7 W/m*K higher than the thermal conductivity of the composite article prepared with high density agglomerates alone.

The viscosity of the polymer composition prepared with low density agglomerates and high density agglomerates, in an amount of 75 wt.-% of low densitiy agglomerates and 25 wt.-% of high density agglomerates based on the total content of low density and high density agglomerates (Example 1), is 3.5 times lower than the viscosity of the polymer composition prepared with low density agglomerates alone (Comparative Example 1), whereas the thermal conductivity of the composite article of Example 1 is significantly higher than the thermal conductivity of the composite article prepared with high density agglomerates alone (Comparative Example 2).

The viscosity of the polymer composition prepared with low density agglomerates and high density agglomerates, in an amount of 50 wt.-% of low densitiy agglomerates and 50 wt.-% of high density agglomerates based on the total content of low density and high density agglomerates (Example 2), is about 9 times lower than the viscosity of the polymer composition prepared with low density agglomerates alone (Comparative Example 1), whereas the thermal conductivity of the composite article of Example 2 is significantly higher than the thermal conductivity of the composite article prepared with high density agglomerates alone (Comparative Example 2).

The viscosity of the polymer compositions prepared with low density and high density agglomerates in combination (Examples 1 and 2) is lower than the viscosity which would have been expected from a linear relationship between the viscosities of the polymer compositions prepared with low density agglomerates alone (Comparative Example 1) and with high density agglomerates alone (Comparative Example 2), it is about 4.7 times lower for Example 2 and about 2.6 times lower for Example 1. On the other hand, the thermal conductivity of composite articles made with low density and high density agglomerates in combination is as expected from a linear relationship between the thermal conductivities of composite articles prepared with low density agglomerates alone and with high density agglomerates alone. Therefore, mixtures of low density and high density irregular shaped boron nitride agglomerates can be used for obtaining high thermal conductivities at low viscosities. Mixtures of low density and high density irregular shaped boron nitride agglomerates can also be used to increase the total amount of thermal conductive filler to achieve higher thermal conductivities than with low density agglomerates alone.

Comparative Examples 3 - 4 and Examples 3 - 4:

Epoxy polymer compositions and composite articles made with flake-shaped boron nitride agglomerates

For Comparative Example 3 (CEX3), Comparative Example 1 is repeated with the exception that 45.8 g of the flake-shaped low density boron nitride agglomerates BN-3 are used instead of the irregular shaped low density boron nitride agglomerates BN-1, as can be seen in Table 2.

For Comparative Example 4 (CEX4), Comparative Example 1 is repeated with the exception that 45.8 g of the flake-shaped high density boron nitride agglomerates BN-4 are used instead of the irregular shaped low density boron nitride agglomerates BN-1, as can also be seen in Table 2.

For Example 3 (EX3), Comparative Example 1 is repeated with the exception that 34.4 g of the flake-shaped low density boron nitride agglomerates BN-3 and 11.5 g of the flake-shaped high density agglomerates BN-4 are used instead of the 45.8 g of the irregular shaped low density boron nitride agglomerates BN-1 (see also Table 2).

For Example 4 (EX4), Comparative Example 1 is repeated with the exception that 22.9 g of the flake-shaped low density agglomerates BN-3 and 22.9 g of the flake-shaped high density agglomerates BN-4 are used instead of the 45.8 g of the irregular shaped low density agglomerates BN-1 (see also Table 2).

As table 2 shows, the polymer composition prepared with low density boron nitride agglomerates alone (Comparative Example 3) has a high viscosity of 120.000 mPa*s. The viscosity of the polymer composition prepared with high density boron nitride agglomerates alone (Comparative Example 4) is 13.000 mPa*s which is about 9 times lower than the viscosity of the polymer composition prepared with low density boron nitride agglomerates alone (Comparative Example 3). The composite article prepared with low density agglomerates alone has a thermal conductivity which is 1.2 W/m*K higher than the thermal conductivity of the composite article prepared with high density agglomerates alone.

The viscosity of the polymer composition prepared with low density agglomerates and high density agglomerates, in an amount of 75 wt.-% of low densitiy agglomerates and 25 wt.-% of high density agglomerates based on the total content of low density and high density agglomerates (Example 3), is only two thirds of the viscosity of the polymer composition prepared with low density agglomerates alone (Comparative Example 3), whereas the thermal conductivity of the composite article of Example 3 is as high as the thermal conductivity of the composite article of Comparative Example 3, and is significantly higher than the thermal conductivity of the composite article prepared with high density agglomerates alone (Comparative Example 4).

The viscosity of the polymer composition prepared with low density agglomerates and high density agglomerates, in an amount of 50 wt.-% of low densitiy agglomerates and 50 wt.-% of high density agglomerates based on the total content of low density and high density agglomerates (Example 4), is 10.000 mPa*s less than half of the viscosity of the polymer composition prepared with low density agglomerates alone (Comparative Example 3), whereas the thermal conductivity of the composite article of Example 4 is significantly higher than the thermal conductivity of the composite article prepared with high density agglomerates alone (Comparative Example 4).

The viscosity of the polymer compositions prepared with low density and high density agglomerates in combination (Examples 3 and 4) is lower than the viscosity which would have been expected from a linear relationship between the viscosities of the polymer compositions prepared with low density agglomerates alone (Comparative Example 3) and with high density agglomerates alone (Comparative Example 4), it is about 14% lower for Example 3 and about 25% lower for Example 4. On the other hand, the thermal conductivity of composite articles made with low density and high density agglomerates in combination is as expected (Example 4) or even higher than expected (Example 3) from a linear relationship between the thermal conductivities of composite articles prepared with low density agglomerates alone and with high density agglomerates alone. Therefore, mixtures of low density and high density flake-shaped boron nitride agglomerates can be used for obtaining high thermal conductivities at low viscosities. Mixtures of low density and high density flake-shaped boron nitride agglomerates can also be used to increase the total amount of thermal conductive filler to achieve higher thermal conductivities than with low density agglomerates alone.

Comparative Examples 5 - 6 and Examples 5 - 6:

Epoxy polymer compositions and composite articles made with spherical shaped silicon carbide agglomerates

For Comparative Example 5 (CEX5), Comparative Example 1 is repeated with the exception that the spherical shaped low density silicon carbide agglomerates SC-1 are used instead of the irregular shaped low density boron nitride agglomerates BN-1, as can be seen in Table 2. 54.0 g of SC-1 and 41.1 g of epoxy resin are mixed and 4.9 g of Epofix hardener is added following the procedure described for Comparative Example 1. Viscosity measurement, curing and measurement of thermal conductivity is carried out as described for Comparative Example 1. The content of silicon carbide filler of the obtained sample of the composite article is 30 vol.-%.

For Comparative Example 6 (CEX6), Comparative Example 5 is repeated with the exception that 54.0 g of the spherical shaped high density silicon carbide agglomerates SC-2 are used instead of the spherical shaped low density silicon carbide agglomerates SC-1, as can also be seen in Table 2.

For Example 5 (EX5), Comparative Example 5 is repeated with the exception that 40.5 g of the low density silicon carbide agglomerates SC-1 and 13.5 g of the high density agglomerates SC-2 are used instead of the 54.0 g of the low density silicon carbide agglomerates SC-1 (see also Table 2).

For Example 6 (EX6), Comparative Example 5 is repeated with the exception that 27.0 g of the low density agglomerates SC-1 and 27.0 g of the high density agglomerates SC-2 are used instead of the 54.0 g of the low density agglomerates SC-1 (see also Table 2).

As table 2 shows, the polymer composition prepared with low density silicon carbide agglomerates alone (Comparative Example 5) has a comparably high viscosity of 52.000 mPa*s, which is the highest viscosity value obtained with the samples prepared with silicon carbide agglomerates (CEX5, CEX6, EX5, EX6). The viscosity of the polymer composition prepared with high density silicon carbide agglomerates alone (Comparative Example 6) is 3.000 mPa*s which is about 17 times lower than the viscosity of the polymer composition prepared with low density silicon carabide agglomerates alone (Comparative Example 5). The composite article prepared with low density agglomerates alone has a thermal conductivity which is 0.8 W/m*K higher than the thermal conductivity of the composite article prepared with high density agglomerates alone.

The viscosity of the polymer composition prepared with low density agglomerates and high density agglomerates, in an amount of 75 wt.-% of low densitiy agglomerates and 25 wt.-% of high density agglomerates based on the total content of low density and high density agglomerates (Example 5), is only 62% of the viscosity of the polymer composition prepared with low density agglomerates alone (Comparative Example 5), whereas the thermal conductivity of the composite article of Example 5 is significantly higher than the thermal conductivity of the composite article prepared with high density agglomerates alone (Comparative Example 6).

The viscosity of the polymer composition prepared with low density agglomerates and high density agglomerates, in an amount of 50 wt.-% of low densitiy agglomerates and 50 wt.-% of high density agglomerates based on the total content of low density and high density agglomerates (Example 6), is more than 8 times lower than the viscosity of the polymer composition prepared with low density agglomerates alone (Comparative Example 5), whereas the thermal conductivity of the composite article of Example 6 is significantly higher than the thermal conductivity of the composite article prepared with high density agglomerates alone (Comparative Example 6).

The viscosity of the polymer compositions prepared with low density and high density agglomerates in combination (Examples 5 and 6) is lower than the viscosity which would have been expected from a linear relationship between the viscosities of the polymer compositions prepared with low density agglomerates alone (Comparative Example 5) and with high density agglomerates alone (Comparative Example 6), it is about 19% lower for Example 5 and more than four times lower for Example 6. On the other hand, the thermal conductivity of composite articles made with low density and high density agglomerates in combination is as expected from a linear relationship between the thermal conductivities of composite articles prepared with low density agglomerates alone and with high density agglomerates alone. Therefore, mixtures of low density and high density spherical shaped silicon carbide agglomerates can be used for obtaining high thermal conductivities at low viscosities. Mixtures of low density and high density spherical shaped silicon carbide agglomerates can also be used to increase the total amount of thermal conductive filler to achieve higher thermal conductivities than with low density agglomerates alone.

Table 2:

| Example | Agglomerate filler type | High and low density agglomerate filler type (30 vol.-%) | Proportion of low density agglomerates | Proportion of high density agglomerates | Viscosity | Thermal conductivity |
|---|---|---|---|---|---|---|
| | | | [wt.-%] | [wt.-%] | [mPa*s] | [W/m*K] |
| CEX1 | Irregular shaped boron nitride agglomerates | BN-1 | 100 | 0 | 350.000 | 2.7 |
| CEX2 | | BN-2 | 0 | 100 | 5.000 | 1.0 |
| EX1 | | BN-1 and BN-2 | 75 | 25 | 100.000 | 2.2 |
| EX2 | | BN-1 and BN-2 | 50 | 50 | 38.000 | 1.9 |
| CEX3 | Flake-shaped boron nitride agglomerates | BN-3 | 100 | 0 | 120.000 | 3.5 |
| CEX4 | | BN-4 | 0 | 100 | 13.000 | 2.3 |
| EX3 | | BN-3 and BN-4 | 75 | 25 | 80.000 | 3.5 |
| EX4 | | BN-3 and BN-4 | 50 | 50 | 50.000 | 3.0 |

(continued)

| Example | Agglomerate filler type | High and low density agglomerate filler type (30 vol.-%) | Proportion of low density agglomerates | Proportion of high density agglomerates | Viscosity | Thermal conductivity |
|---|---|---|---|---|---|---|
| | | | [wt.-%] | [wt.-%] | [mPa*s] | [W/m*K] |
| CEX5 | Spherical shaped silcon carbide agglomerates | SC-1 | 100 | 0 | 52.000 | 1.5 |
| CEX6 | | SC-2 | 0 | 100 | 3.000 | 0.7 |
| EX5 | | SC-1 and SC-2 | 75 | 25 | 32.000 | 1.3 |
| EX6 | | SC-1 and SC-2 | 50 | 50 | 6.000 | 1.1 |

Comparative Examples 7 - 8 and Examples 7 - 8:

Epoxy polymer compositions and composite articles made with flake-shaped boron nitride agglomerates and spherical alumina

For Comparative Example 7 (CEX7), Comparative Example 3 is repeated with the exception that the flake-shaped low density boron nitride agglomerates BN-3 are used in combination with spherical alumina agglomerates instead of the flake-shaped low density boron nitride agglomerates BN-3 alone, as can be seen in Table 3. 23.7 g of BN-3, 40.3 g of alumina with an average particle size $d_{50}$ of 130 $\mu$m, a $d_{10}$ of 80 $\mu$m, a $d_{90}$ of 200 $\mu$m and a BET of 0.011m$^2$/g, and 32.2 g of epoxy resin are mixed and 3.9 g of Epofix hardener is added following the procedure described for Comparative Example 1. Viscosity measurement, curing and measurement of thermal conductivity is carried out as described for Comparative Example 1. The total content of boron nitride and alumina filler of the obtained sample of the composite article is 40 vol.-%.

For Comparative Example 8 (CEX8), Comparative Example 7 is repeated with the exception that the low density boron nitride agglomerates BN-3 are replaced by the high density agglomerates BN-4, as can also be seen in Table 3.

For Example 7 (EX7), Comparative Example 7 is repeated with the exception that 17.8 g of the low density boron nitride agglomerates BN-3 and 5.9 g of the high density agglomerates BN-4 are used instead of the 23.7 g of the low density boron nitride agglomerates BN-3 (see also Table 3). The same amount of alumina filler is used as in Comparative Example 7.

For Example 8 (EX8), Comparative Example 7 is repeated with the exception that 11.9 g of the low density agglomerates BN-3 and 11.9 g of the high density agglomerates BN-4 are used instead of the 23.7 g of the low density agglomerates BN-3 (see also Table 3). The same amount of alumina filler is used as in Comparative Example 7.

As table 3 shows, the polymer composition prepared with low density boron nitride agglomerates and alumina alone (Comparative Example 7) has a high viscosity of 78.000 mPa*s. The viscosity of the polymer composition prepared with high density boron nitride agglomerates and alumina alone (Comparative Example 8) is 21.000 mPa*s which is 3.7 times lower than the viscosity of the polymer composition prepared with low density boron nitride agglomerates and alumina alone (Comparative Example 7). The composite article prepared with low density agglomerates and alumina alone has a thermal conductivity which is 0.7 W/m*K higher than the thermal conductivity of the composite article prepared with high density agglomerates and alumina alone.

The viscosity of the polymer composition prepared with low density agglomerates and high density agglomerates, in an amount of 75 wt.-% of low densitiy agglomerates and 25 wt.-% of high density agglomerates based on the total content of low density and high density agglomerates, and with alumina (Example 7), is 35% lower than the viscosity of the polymer composition prepared with low density agglomerates and alumina alone (Comparative Example 7), whereas the thermal conductivity of the composite article of Example 7 is almost as high as the thermal conductivity of the composite article of Comparative Example 7, and is significantly higher than the thermal conductivity of the composite article prepared with high density agglomerates alone (Comparative Example 8).

The viscosity of the polymer composition prepared with low density agglomerates and high density agglomerates, in an amount of 50 wt.-% of low densitiy agglomerates and 50 wt.-% of high density agglomerates based on the total content of low density and high density agglomerates, and with alumina (Example 8), is 58% lower than the viscosity of the polymer composition prepared with low density agglomerates and alumina alone (Comparative Example 7), whereas the thermal conductivity of the composite article of Example 8 is higher than the thermal conductivity of the composite article prepared with high density agglomerates alone (Comparative Example 8).

The viscosity of the polymer compositions prepared with low density and high density agglomerates and alumina in combination (Examples 7 and 8) is lower than the viscosity which would have been expected from a linear relationship between the viscosities of the polymer compositions prepared with low density agglomerates and alumina alone (Comparative Example 7) and with high density agglomerates and alumina alone (Comparative Example 8), it is about 21% lower for Example 7 and about 35% lower for Example 8. On the other hand, the thermal conductivity of composite articles made with low density and high density agglomerates and alumina in combination is as expected from a linear relationship between the thermal conductivities of composite articles prepared with low density agglomerates and alumina alone and with high density agglomerates and alumina alone. Therefore, mixtures of low density and high density flake-shaped boron nitride agglomerates can be used, even in combination with alumina, for obtaining high thermal conductivities at low viscosities. Mixtures of low density and high density flake-shaped boron nitride agglomerates can also be used, even in combination with alumina, to increase the total amount of thermal conductive filler to achieve higher thermal conductivities than with low density agglomerates alone.

Table 3:

| Example | Filler type | High and low density agglomerate filler type | Proportion of low density agglomerates (BN-3) | Proportion of high density agglomerates (BN-4) | Viscosity | Thermal conductivity |
|---|---|---|---|---|---|---|
| | | | [wt.-%] | [wt.-%] | [mPa*s] | [W/m*K] |
| CEX7 | boron nitride flake-shaped agglomerates (20 vol.-%) and alumina (20 vol.-%) | BN-3 | 100 | 0 | 78000 | 2.9 |
| CEX8 | | BN-4 | 0 | 100 | 21200 | 2.2 |
| EX7 | | BN-3 and BN-4 | 75 | 25 | 50400 | 2.8 |
| EX8 | | BN-3 and BN-4 | 50 | 50 | 32400 | 2.5 |

Comparative Examples 9 - 10 and Examples 9 - 10:

Polyamide polymer compositions and composite articles made with flake-shaped boron nitride agglomerates

For Comparative Example 9 (CEX9), polyamide PA 6 (Schulamid® 6 NV 12, A. Schulman, Kerpen, Germany) is added in a twin-screw extruder (Leistritz ZSE 18 MAXX, Nuremburg, Germany) as the polymer in a gravimetric main feeding and boron-nitride low density agglomerates BN-3 are added in a gravimetric side feeding. The screw speed is set to 300 rpm and a throughput of 5 kg/h is run, wherein 2.7 kg/h PA 6 is dosed in the main feeding and 2.3 kg/h BN-3 in the side feeding. The twin-screw extruder is run at 260 °C. The obtained compound is channeled through two 3 mm nozzles, passes through a cooling section in a water bath and is shredded to form granules. The proportion of boron nitride agglomerates BN-3 in the obtained polymer composition in the form of compound granules is 30% by volume.

The compound granules are injection-molded in an injection molding machine (Victory 80, 30 mm screw, 800 kN clamping force; Engel, Schwertberg, Austria) into a spiral with the dimensions 1150 x 5 x 2 $mm^3$. The screw speed during plasticization is 0.3 mm/sec. The injection rate during injection molding is 150 $cm^3$/sec, the injection pressure is limited to 1200 bar. The mold temperature of the injection mold is 90 °C and the melt temperature of the compound melt is 250 ° C. The length of the injection-molded spiral-shaped composite article is measured and reported as flow path in Table 4. The higher the flow path, the lower is the viscosity of the polymer composition during injection-molding.

The obtained compound granules are injection-molded in an injection molding machine (Victory 80; Engel, Schwertberg, Austria) to form 2 mm thin plates having the dimensions 60 x 60 x 2 $mm^3$. The screw speed during plasticization is 0.3 mm/sec. The injection rate during injection molding is 80 $cm^3$/sec, the injection pressure is 820 bar and the holding pressure is 600 bar. The mold temperature of the injection mold is 120 °C and the melt temperature of the compound melt is 250 °C.

Thermal conductivity is measured as through-plane thermal conductivity on samples having the dimensions 10 x 10 x 2 $mm^3$ which are prepared from the center of an injection-molded plate having a thickness of 2 mm (dimensions 60 x 60 x 2 $mm^3$). The thickness of the sample for through-plane thermal conductivity measurement corresponds to the plate thickness from the injection molding.

The measurement of the thermal conductivity according to DIN EN ISO 22007-4 was carried out as described above for Comparative Example 1, using the Nanoflash LFA 447 (Netzsch, Selb, Germany). Measurements are taken at 22 °C.

For Comparative Example 10 (CEX10), Comparative Example 9 is repeated with the difference that boron nitride high density agglomerates BN-4 are used instead of boron nitride low density agglomerates BN-3 (see also table 4). The injection rate during injection molding is 80 mm/sec, the injection pressure is 840 bar, the mold temperature of the injection mold is 120 °C and the melt temperature of the compound melt is 245 °C.

For Example 9 (EX9), Comparative Example 9 is repeated with the difference that a mixture of boron-nitride agglomerates BN-3 and BN-4 is added in the gravimetric side feeding of the twin-screw extruder, instead of dosing only agglomerates BN-3 in the gravimetric side feeding. The mixture of BN-3 and BN-4 has an amount of 50 wt.-% BN-3 and 50 wt.-% BN-4 and is prepared by jar rolling for 5 minutes. 2.3 kg/h of the mixture of BN-3 and BN-4 is dosed in the side feeding. 2.7 kg/h PA 6 is dosed in the main feeding as in Comparative Example 9. The injection rate during injection molding is 80 cm$^3$/sec, the injection pressure is 600 bar, the mold temperature of the injection mold is 120 °C and the melt temperature of the compound melt is 250 °C.

Table 4:

| Example | Agglomerate filler type | High and low density agglomerate filler type (30 vol.-%) | Proportion of low density agglomerates | Proportion of high density agglomerates | Flow path | Through-plane thermal conductivity |
|---|---|---|---|---|---|---|
| | | | [wt.-%] | [wt.-%] | [mm] | [W/m*K] |
| CEX9 | Boron Nitride flake-shaped agglomerates | BN-3 | 100 | 0 | 480 | 2.3 |
| CEX10 | | BN-4 | 0 | 100 | 740 | 1.7 |
| EX9 | | BN-3 and BN-4 | 50 | 50 | 620 | 1.9 |

The examples show that mixtures of low density and high density agglomerates can be used for obtaining high thermal conductivities at low viscosities. Mixtures of low density and high density agglomerates can also be used or to increase the total amount of thermal conductive filler to achieve higher thermal conductivities than with low density agglomerates alone.

**Claims**

1. A powder composition comprising first and second agglomerates of inorganic particles, wherein the first agglomerates have an envelope density of from 20 to 70% of the theoretical density of the inorganic particles of the first agglomerates, and wherein the second agglomerates have an envelope density of from 50 to 100% of the theoretical density of the inorganic particles of the second agglomerates, and wherein the second agglomerates have an envelope density which is higher than the envelope density of the first agglomerates.

2. The powder composition according to claim 1, wherein the first agglomerates have an envelope density of from 30 to 65% of the theoretical density of the inorganic particles of the first agglomerates and wherein the second agglomerates have an envelope density of from 65 to 95% of the theoretical density of the inorganic particles of the second agglomerates.

3. The powder composition according to claim 1 or 2, wherein the second agglomerates have an envelope density which is at least 5%, or at least 10%, or at least 20% higher than the envelope density of the first agglomerates, based on the envelope density of the first agglomerates.

4. The powder composition according to any of claims 1 to 3, wherein the inorganic particles of the first and second agglomerates are selected from the group consisting of boron nitride, alumina, aluminum nitride, silicon carbide, silicon nitride, magnesium oxide, or mixtures thereof.

5. The powder composition of any of claims 1 to 4, wherein the inorganic particles of the first and of the second agglomerates comprise boron nitride, or wherein the inorganic particles of the first and of the second agglomerates comprise alumina, or wherein the inorganic particles of the first and of the second agglomerates comprise aluminum nitride, or wherein the inorganic particles of the first and of the second agglomerates comprise silicon carbide, or wherein the inorganic particles of the first and of the second agglomerates comprise silicon nitride, or wherein the inorganic particles of the first and of the second agglomerates comprise magnesium oxide.

6. The powder composition of any of claims 1 to 5, wherein the inorganic particles of the first agglomerates comprise at least 50% by weight of boron nitride, based on the total weight of the first agglomerates, and the inorganic particles of the second agglomerates comprise at least 50% by weight of boron nitride, based on the total weight of the second agglomerates,
or wherein the inorganic particles of the first agglomerates comprise at least 50% by weight of alumina, based on the total weight of the first agglomerates, and the inorganic particles of the second agglomerates comprise at least 50% by weight of alumina, based on the total weight of the second agglomerates,
or wherein the inorganic particles of the first agglomerates comprise at least 50% by weight of aluminum nitride, based on the total weight of the first agglomerates, and the inorganic particles of the second agglomerates comprise at least 50% by weight of aluminum nitride, based on the total weight of the second agglomerates,
or wherein the inorganic particles of the first agglomerates comprise at least 50% by weight of silicon carbide, based on the total weight of the first agglomerates, and the inorganic particles of the second agglomerates comprise at least 50% by weight of silicon carbide, based on the total weight of the second agglomerates,
or wherein the inorganic particles of the first agglomerates comprise at least 50% by weight of silicon nitride, based on the total weight of the first agglomerates, and the inorganic particles of the second agglomerates comprise at least 50% by weight of silicon nitride, based on the total weight of the second agglomerates,
or wherein the inorganic particles of the first agglomerates comprise at least 50% by weight of magnesium oxide, based on the total weight of the first agglomerates, and the inorganic particles of the second agglomerates comprise at least 50% by weight of magnesium oxide, based on the total weight of the second agglomerates.

7. The powder composition of any of claims 1 to 6, wherein the inorganic particles of the first agglomerates comprise at least 50% by weight of boron nitride, based on the total weight of the first agglomerates, and wherein the inorganic particles of the second agglomerates comprise at least 50% by weight of boron nitride, based on the total weight of the second agglomerates, and wherein the amount of the first agglomerates is from 50 to 95% by weight, based on the total content of the first and the second agglomerates, and wherein the amount of the second agglomerates is from 5 to 50% by weight, based on the total content of first and second agglomerates, and wherein the average agglomerate size ($d_{50}$) of the first agglomerates is from 25 $\mu$m to 500 $\mu$m, and wherein the average agglomerate size ($d_{50}$) of the second agglomerates is from 25 $\mu$m to 500 $\mu$m, and wherein the envelope density of the first agglomerates is from 30 to 65% of the theoretical density of the inorganic particles of the first agglomerates, and the envelope density of the second agglomerates is from 65 to 95% of the theoretical density of the inorganic particles of the second agglomerates, and wherein the specific surface area of the first agglomerates is at most 30 m$^2$/g, and wherein the specific surface area of the second agglomerates is at most 30 m$^2$/g.

8. The powder composition according to any of claims 1 to 7, wherein the amount of first agglomerates is up to 99% by weight, based on the total content of first and second agglomerates, and wherein the amount of second agglomerates is up to 99% by weight, based on the total content of first and second agglomerates.

9. The powder composition of any of claims 1 to 8, wherein the first or the second agglomerates of inorganic particles do not have a spherical shape, or wherein the first and the second agglomerates of inorganic particles do not have a spherical shape.

10. A polymer composition comprising a polymer and the powder composition of any of claims 1 to 9.

11. A composite article made from the polymer composition of claim 10.

12. Kit of parts for producing the powder composition of any of claims 1 to 9, wherein the kit of parts comprises a first part comprising first agglomerates of inorganic particles in powder form and a second part comprising second agglomerates of inorganic particles in powder form, wherein the first agglomerates have an envelope density of from 20 to 70% of the theoretical density of the inorganic particles of the first agglomerates, and wherein the second agglomerates have an envelope density of from 50 to 100% of the theoretical density of the inorganic particles of the second agglomerates, and wherein the second agglomerates have an envelope density which is higher than the envelope density of the first agglomerates.

13. A process for producing the powder composition of any of claims 1 to 9, the process comprising the steps of providing a first powder comprising first agglomerates of inorganic particles and a
second powder comprising second agglomerates of inorganic particles, and mixing the first and the second powder;

wherein the first agglomerates have an envelope density of from 20 to 70% of the theoretical density of the inorganic particles of the first agglomerates, and wherein the second agglomerates have an envelope density of from 50 to 100% of the theoretical density of the inorganic particles of the second agglomerates, and wherein the second agglomerates have an envelope density which is higher than the envelope density of the first agglomerates.

14. A process for making the composite article of claim 11, comprising the steps of
providing the powder composition of any of claims 1 to 9 and a polymer,
mixing the powder composition and the polymer to obtain a mixed composition,
placing the mixed composition into a mold, and
curing the mixed composition, thereby obtaining the composite article.

15. Use of the powder composition of any of claims 1 to 9 as thermal conduction means to control the temperature of electrical and electronic components or assemblies or batteries.

*FIG. 1*

Europäisches
Patentamt

European
Patent Office

Office européen
des brevets

## EUROPEAN SEARCH REPORT

**Application Number**

EP 17 20 8216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 127 973 A1 (3M INNOVATIVE PROPERTIES CO [US]) 8 February 2017 (2017-02-08) * paragraphs [0009], [0051], [0054] - [0056], [0142], [0145]; examples C2,5,6,7 * | 1-15 | INV. C01B21/064 C01B21/068 C01B21/072 C01F5/02 C01F7/02 |
| A | 3m Technical Ceramics: "3M Boron Nitride Cooling Filler Agglomerates", , 1 January 2016 (2016-01-01), XP055477353, Retrieved from the Internet: URL:http://multimedia.3m.com/mws/media/100 08140/3m-boron-nitride-cooling-filler-aggl omerates.pdf [retrieved on 2018-05-22] | 1-15 | C01B32/956 |
| A | Esk Ceramics: "Product Information 3M Boron Nitride Filler Platelets", , 1 January 2014 (2014-01-01), XP055477344, Retrieved from the Internet: URL:https://web.archive.org/web/2015092709 4256/http://technical-ceramics.3mdeutschla nd.de:80/fileadmin/content/download/produk tinformation-EN/PI_boron_nitride_cooling_f iller_platelets_e.pdf [retrieved on 2018-05-22] | 1-15 | |
| A | WO 2005/021428 A1 (SAINT GOBAIN CERAMICS [US]; PRUSS EUGENE A [US]; CLERE THOMAS M [US]) 10 March 2005 (2005-03-10) * paragraph [0064]; examples 1-3; table 2 * | 1-15 | **TECHNICAL FIELDS SEARCHED (IPC)** C01B C01F |

The present search report has been drawn up for all claims

| Place of search | Date of completion of the search | Examiner |
|---|---|---|
| The Hague | 23 May 2018 | Gumann, Sina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 8216

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2018

| Patent document cited in search report | | | Publication date | Patent family member(s) | | | Publication date |
|---|---|---|---|---|---|---|---|
| EP 3127973 | | A1 | 08-02-2017 | CN | 107849409 | A | 27-03-2018 |
| | | | | EP | 3127973 | A1 | 08-02-2017 |
| | | | | KR | 20180039095 | A | 17-04-2018 |
| | | | | TW | 201718741 | A | 01-06-2017 |
| | | | | WO | 2017027178 | A1 | 16-02-2017 |
| WO 2005021428 | | A1 | 10-03-2005 | CA | 2534787 | A1 | 10-03-2005 |
| | | | | CN | 1839096 | A | 27-09-2006 |
| | | | | CN | 103086719 | A | 08-05-2013 |
| | | | | EP | 1656323 | A1 | 17-05-2006 |
| | | | | JP | 4662933 | B2 | 30-03-2011 |
| | | | | JP | 2007502770 | A | 15-02-2007 |
| | | | | JP | 2011040788 | A | 24-02-2011 |
| | | | | TW | I276603 | B | 21-03-2007 |
| | | | | US | 2005041373 | A1 | 24-02-2005 |
| | | | | US | 2009071695 | A1 | 19-03-2009 |
| | | | | US | 2011147064 | A1 | 23-06-2011 |
| | | | | WO | 2005021428 | A1 | 10-03-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008042446 A

- US 20120114905 A1